# EUROPEAN PATENT APPLICATION

(11) **EP 0 728 964 A2**
(43) Date of publication of application: **28.08.1996**
(21) Application number: 96102324.9
(22) Date of filing: 16.02.1996
(51) Int. Cl.: F16H 59/02

(54) **A gear lever support for motor vehicle mechanical gearbox**

(30) Priority: 23.02.1995 IT TO950041 U
(71) Applicant: FIAT AUTO S.p.A., I-10135 Torino (IT)
(72) Inventor: Riccardi, Gian Maria, I-20095 Cusano Milanino MI (IT); Santoro, Francesco, I-20100 Novara NO (IT)
(74) Representative: Di Francesco, Gianni

(57) **Abstract**

In a gear lever support (8) for a stick shift type of gearshift employing two push-pull cables to transmit selecting and engaging movements from the lever (2) to the gearshift, one end of the lever (2) has a ball (3) fitted with gear selecting and/or engaging pins (5, 6, 35) for connecting to said cables. The ball (3) is movably contained within the support (8) in appropriate seats (11, 14). The support provides apertures (25, 26, 36) for letting the pins (5, 6, 35) out. The aperture (26) for letting the gear selecting pin (5) out is provided with a guide (28) adapted to cooperate with pin (5) for limiting rotational movement of the lever (2) about its own axis.

## Description

The present invention refers to a gear lever support for a motor vehicle gearbox, particularly of the stick shift type.

At present, the push-pull type of gearshift is used for transmitting lever motion to the gear shafts.

With the floor-type gearshift, the gear lever is anchored to the vehicle floor, generally between the front seats. Generally, a driving gear is used to transmit motion while selecting the gears. Said driving gear transforms lateral movement in longitudinal movement of a gearshift cable.

With stick shift types of gearshift, there is no need to use such a gear lever. Usually, there is not enough room available for locating the cables so that they can depart from the lever in a direction parallel to same, instead of lying in a substantially perpendicular plane, as with floor-type gearshifts.

With stick shift types, two pins are fitted at the lower end of the gear lever. The two pins are for connection to the gearshift cables, the axes of which are substantially perpendicular therebetween and also to the axis of said lever.

One of the problems that are encountered with the kind of gearshift lacking a driving gear for transforming lateral movement of gear selectioning is that the lever tends to rotate about its own axis during selection movement. This movement compromises transmission to the gearbox through the push-pull cable.

An object of the present invention is to provide a support for the gear lever for shift stick types of gearshifts, capable of overcoming the above drawbacks in a simple and cost saving manner.

The above and further objects which will be more apparent hereinafter are attained according to the present invention by the provision of a gear lever support as claimed in claim 1.

For a better understanding of the present invention, reference is made to the following detailed description of various exemplary embodiments considered in combination with the accompanying drawings in which:

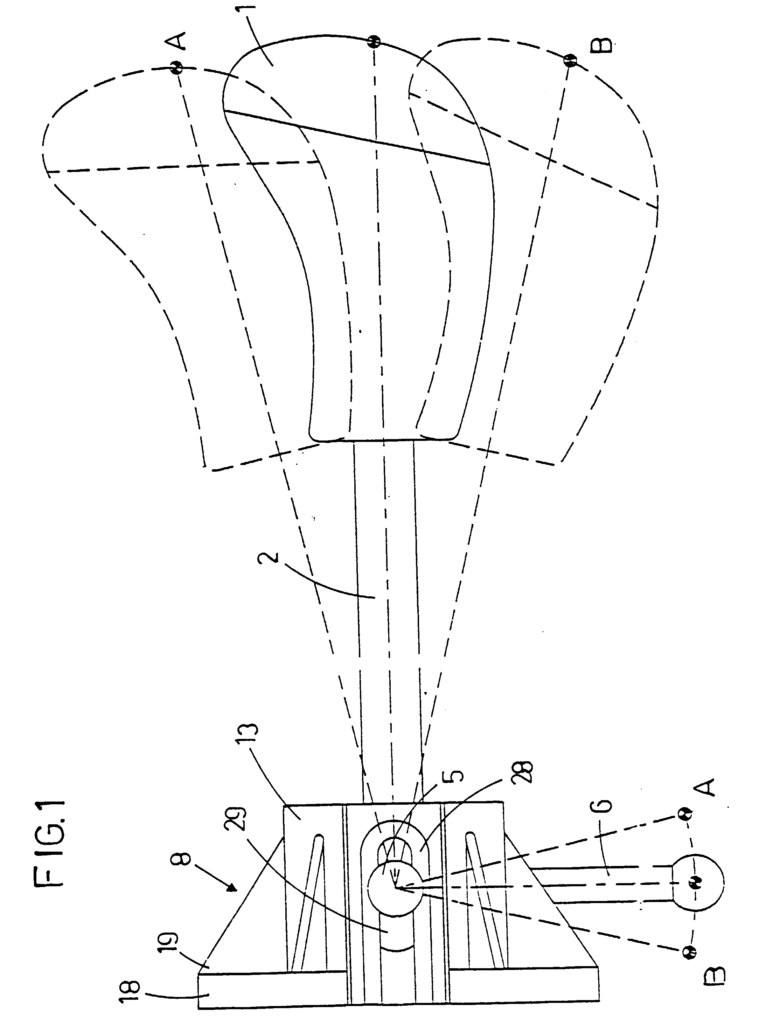

- FIG. 1: is a side view of a support provided with a shift lever, the gear selectioning positions being depicted in phantom;

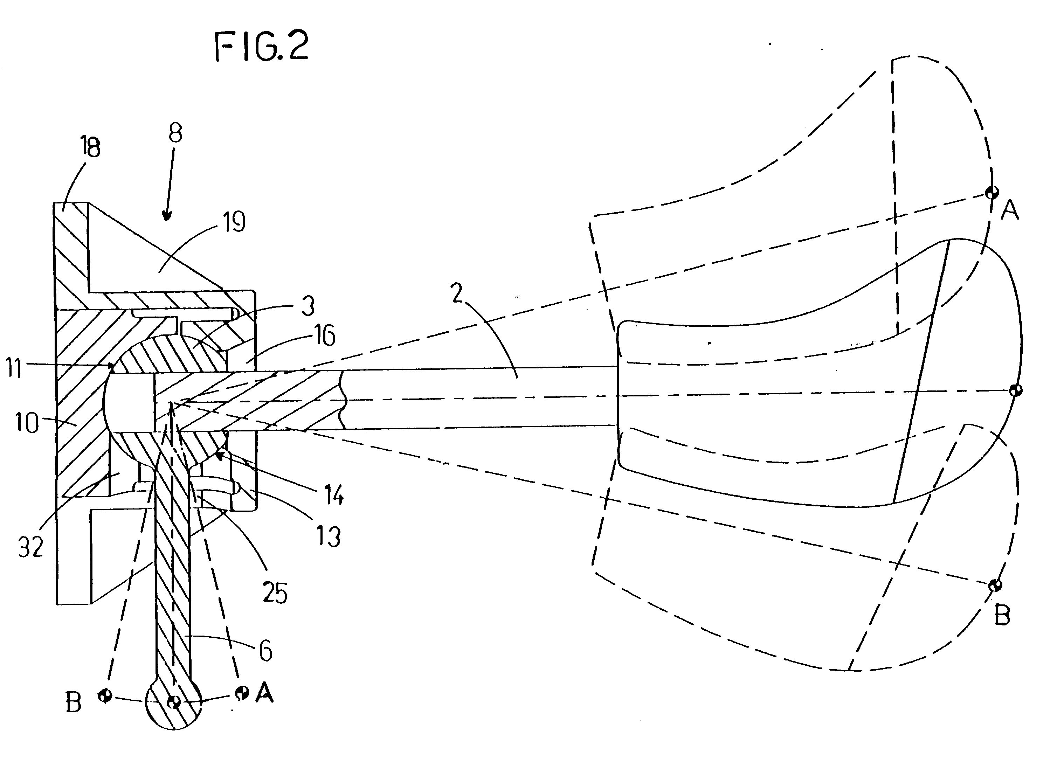

- FIG. 2: is a partial section view of the support and lever of FIG. 1;

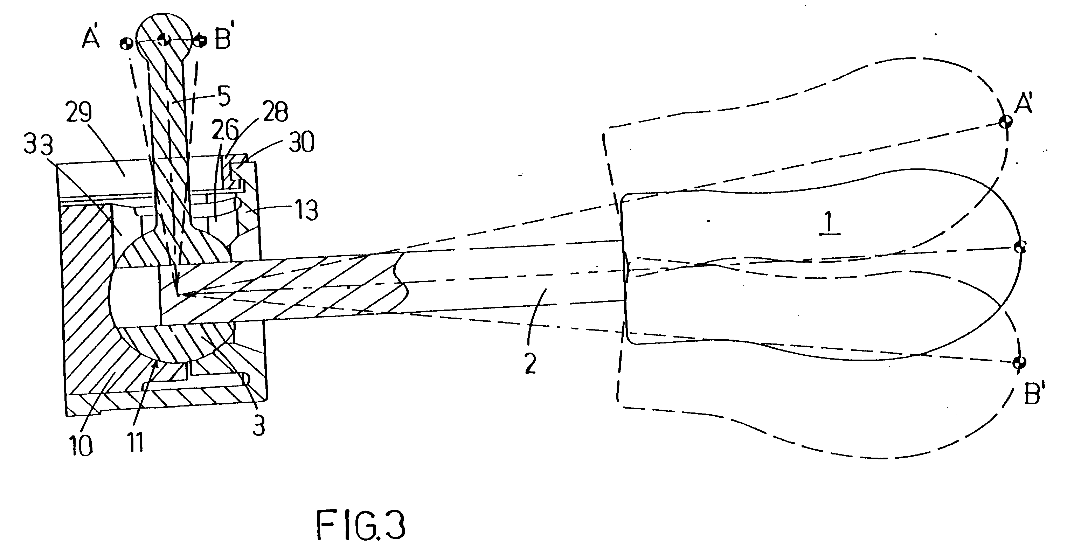

- FIG. 3: is a partial section view of the support of FIG. 1 fitted with the gearshift lever, the gear selection positions being shown in phantom; and
- FIG. 4: illustrates a second embodiment of the present invention.

With reference to the drawings, numeral 1 designates the knob of a gear shift lever for a motor vehicle of the shift stick type.

Connected to knob 1 is a lever 2 the other end of which there is provided with, for example co-moulded to, a ball 3 preferably of anti-friction material. Fused to ball 3 or connected thereto by known means are two pins 5, 6, the axes of which a re substantially perpendicular to the axis of lever 2. Pins 5, 6 are also substantially perpendicular to each other, and their ends are connected by known means to push-pull cables (not shown for simplicity). As known, said cables are adapted for transmitting motion of lever 2 and pins 5 and 6 to select and engage gears.

Ball 3 is contained in a support 8 comprising a shell 100 with a hemispherical seat 11 the contour of which copies substantially that of the half-ball 3 opposite shell 10.

The inner wall of a cap 13 provides a hemispherical seat 14 the contour of which is substantially identical to that portion of the ball facing the knob 1. Obtained in cap 13 is an axial bore 16 for letting the lever 2 through and allowing same to be free in accomplishing gear selecting movements.

The shell 10 and the cap 13, inserted one within the other, are adapted for containing ball 3 and are preferably made of anti-friction material. Moreover, cap 13 has radial walls 18 sustained by ribs 19 for fixing support 8 to the motor vehicle dashboard by known means.

Besides having the axial bore 16 for letting lever 2 through, cap 13 has two more apertures 25, 26. Aperture 25 lets out gear selecting pin 6 which is connected to the gear engaging cable. Aperture 26 lets out pin 5 which is connected to the gear selecting cable. In accordance with the present invention, second aperture 26 is delimited by a guide 28 having an elongated opening 29 that allows pin 5 to slide along one axis only to the necessary extent. Guide 28 is retained within aperture 26 by a joint 30. Shell 10 provides chamfers for allowing movement of pins 5 and 6 in operation.

In this way, guide 28 prevents rotational movements about the axis of the lever from occurring, which could otherwise jeopardise correct operation of the gearbox.

In addition, locking due to faulty sliding of pin 5 along guide 28 during manoeuvres are avoided by virtue of the anti-friction material constituting the guide.

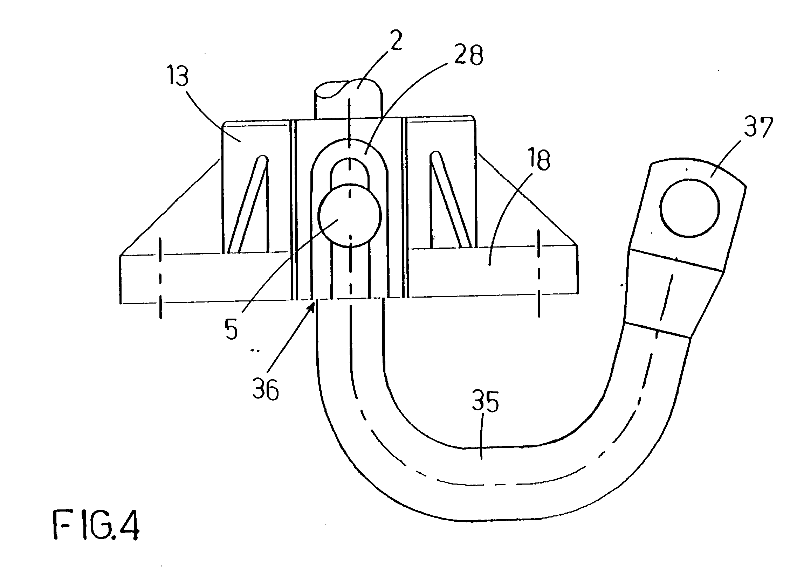

In the second embodiment of the present invention, depicted in FIG. 4, ball 3 is provided with a third pin 35 coaxial to lever 2. Pin 35 extends out of an opening 36 obtained axially in shell 10 and by describing an arch of substantially 180° it positions its free end 37 at the same point where the end of gear engaging pin 6 would be.

Naturally, the above discussed pin 6 is eliminated together with the first aperture 25. The end portion 37 of extension 35 is connected to the gear engaging cable, that can therefore be controlled through lever 2.

This embodiment allows not to weaken the cap 13-shell 10 assembly with the aperture 25, and at the same time dispenses with the use of a sharp object directed towards the passengers.

## Claims

1. A gear lever support for a stick shift type of gearshift employing two push-pull cables to transmit selecting and engaging movements from the lever (2) to the gearshift, one end of said lever (2) having a ball (3) fitted with gear selecting and/or engaging pins (5, 6, 35) for connecting to said cables, said ball (3) being movably contained within said support (8) in appropriate seats (11, 14), characterised in that said support provides apertures (25, 26, 36) for letting said pins (5, 6, 35) out, and that said aperture (26) for letting the gear selecting pin (5) out is provided with a guide (28) adapted to cooperate with said pin (5) for limiting rotational movement of the lever (2) about its own axis.

2. A support as claimed in claim 1, characterised in that said guide (28) has an elongated aperture (29) adapted for allowing sliding motion of gear selecting pin (5) along a defined axis.

3. A support as claimed in claim 1, characterised in that the guide (28) is of anti-friction material.

4. A support as claimed in claim 1, characterised in that the guide (28) is kept in a vertical position by an joint.
